(19) Europäisches Patentamt / European Patent Office / Office européen des brevets

(11) **EP 3 546 604 A1**

(12) **EUROPEAN PATENT APPLICATION**
published in accordance with Art. 153(4) EPC

(43) Date of publication:
**02.10.2019 Bulletin 2019/40**

(51) Int Cl.:
**C22B 59/00** (2006.01)   **C22B 3/26** (2006.01)

(21) Application number: **17873473.7**

(22) Date of filing: **15.11.2017**

(86) International application number:
**PCT/JP2017/041068**

(87) International publication number:
**WO 2018/097001 (31.05.2018 Gazette 2018/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **24.11.2016   JP 2016227844**
                **18.05.2017   JP 2017098807**
                **29.06.2017   JP 2017128029**

(71) Applicant: **Sumitomo Metal Mining Co., Ltd.**
**Tokyo 105-8716 (JP)**

(72) Inventors:
• **SHOJI Hirofumi**
  **Niihama-shi**
  **Ehime 792-0002 (JP)**
• **HIGAKI Tatsuya**
  **Niihama-shi**
  **Ehime 792-0002 (JP)**
• **KOBAYASHI Hiroshi**
  **Niihama-shi**
  **Ehime 792-0002 (JP)**
• **OHARA Go**
  **Tokyo 105-8716 (JP)**
• **NAKAI Osamu**
  **Tokyo 105-8716 (JP)**

(74) Representative: **Jones, Nicholas Andrew**
**Withers & Rogers LLP**
**4 More London Riverside**
**London, SE1 2AU (GB)**

(54) **SCANDIUM PURIFICATION METHOD**

(57)      Provided is a simple scandium purification method, whereby it becomes possible to separate both of elements thorium and uranium from a scandium-containing acidic solution in one step. The scandium purification method according to the present invention is characterized in that a scandium-containing acidic solution is subjected to solvent extraction using a mixed extractant containing a primary amine and a tertiary amine to separate the acidic solution into a scandium-containing liquid extraction residue and a post-extraction extractant. The mixed extractant is particularly preferably one that contains the tertiary amine in an amount of 20% by volume or more and less than 100% by volume relative to the amount of the primary amine.

FIG. 1

NICKEL OXIDE ORE
LEACHING STEP — S11 ~ S1
LEACHATE
NEUTRALIZATION STEP — S12
POST-NEUTRALIZATION LIQUID
SULFURIZATION STEP — S13
POST-SULFURIZATION LIQUID
SCANDIUM (Sc) ELUTION STEP — S2
Sc ELUATE
NEUTRALIZATION STEP — S3
REUSE
EXTRACTION STEP — S41 ~ S4      LIQUID EXTRACTION RESIDUE
POST-EXTRACTION EXTRACTANT
SCRUBBING STEP — S42      POST-WASHING LIQUID
BACKWARD EXTRACTION STEP — S43      SCANDIUM RECOVERY STEP — S5
POST-BACKWARD EXTRACTION LIQUID / EXTRACTANT
(AFTER ACID WASHING) EXTRACTANT      ACID WASHING STEP — S6

**Description**

TECHNICAL FIELD

The present invention relates to a scandium purification method, which is a scandium purification method by which it is possible to efficiently separate a plurality of impurities from a scandium-containing acidic solution.

BACKGROUND ART

Scandium is extremely useful as an additive for high strength alloys and as an electrode material for fuel cells. However, scandium has not been widely used because of a small amount of production and a high price thereof.
Meanwhile, in recent years, a high pressure acid leach (HPAL) process has been proposed to recover a small amount of scandium contained in nickel oxide ore such as laterite and limonite ore as described in Patent Document 1. In this HPAL process, nickel oxide ore is charged into a pressure vessel together with sulfuric acid and heated to a high temperature of about from 240°C to 260°C to separate the mixture into a leachate containing nickel and a leach residue by solid-liquid separation. Thereafter, when a neutralizing agent is added to the leachate obtained to separate the impurities and then a sulfurizing agent is added to the resultant leachate, nickel is recovered as nickel sulfide while scandium is contained in the acidic solution after the addition of a sulfurizing agent. It is possible to effectively separate nickel and scandium from each other by using the HPAL process in this manner.
In addition, as a method of recovering scandium from the acidic solution described above, a method of recovering scandium by solvent extraction has also been proposed (see Patent Documents 2 and 3). For example, Patent Document 2 describes a method of extracting scandium into an organic solvent using an organic solvent obtained by diluting 2-ethylhexylsulfonic acid-mono-2-ethylhexyl with kerosene. In addition, Patent Document 3 describes a method of selectively separating and recovering scandium from a scandium-containing supply solution by bringing the scandium-containing supply solution into contact with an extractant at a certain proportion by a batch treatment.
It is known that a purity of about from 95% to 98% in terms of scandium oxide is obtained as the grade of scandium to be recovered by these methods. This is a sufficient grade for applications such as addition to alloys, but a grade having a higher purity, for example, about 99.9% is required in order to exert the properties for applications such as electrolytes of fuel cells, the demand for which has increased in recent years. In addition, in the case of specific elements, there is an acceptable upper limit grade, and it is thus required to purify the individual elements to acceptable limits or less but not only to achieve the purity of scandium.
Although the impurities contained in nickel oxide ore vary in kind and amount depending on the region from which the nickel oxide ore is produced, nickel oxide ore contains various impurity elements including elements such as manganese and magnesium and further, in some cases, actinide elements such as thorium and uranium in small amounts in addition to iron and aluminum.
However, in the case of using the solvent extraction methods disclosed in Patent Documents 2 and 3, it has been difficult to industrially recover high purity scandium from nickel oxide ore since some of the impurity elements described above, particularly actinide elements such as thorium and uranium, exhibit behavior similar to that of scandium.
Patent Document 4 proposes a scandium purification method, in which thorium is separated from a scandium-containing solution by solvent extraction using an amine-based extractant and then scandium is separated from uranium by performing an oxalate formation treatment. It is possible to recover scandium oxide having a high purity of 99.9% by this method of Patent Document 4.
However, in the method disclosed in Patent Document 4, there is also a case in which a treatment is required to separate the respective impurity components from scandium in separate steps depending on the kind of impurities such as thorium and uranium, and the burden from the view point of facility and cost is large.

Patent Document 1: Japanese Unexamined Patent Application, Publication No. H03-173725
Patent Document 2: Japanese Unexamined Patent Application, Publication No. H09-291320
Patent Document 3: PCT International Publication No. WO2014/110216
Patent Document 4: Japanese Unexamined Patent Application, Publication No. 2016-108664

DISCLOSURE OF THE INVENTION

Problems to be Solved by the Invention

The present invention has been proposed in view of the circumstances described above, and an object thereof is to provide a simple and economical scandium purification method, by which it is possible to separate both elements of thorium and uranium from a scandium-containing acidic solution in one step.

Means for Solving the Problems

The present inventors have intensively conducted investigations to solve the problems described above. As a result, it has been found out that both thorium and uranium can be extracted from a scandium-containing acidic solution and separated from scandium in one step by using an extractant in which a primary amine and a tertiary amine are mixed together, and the present invention has been thus completed.

(1) A first aspect of the present invention is a scandium purification method, including subjecting a scandium-containing acidic solution to solvent extraction using a mixed extractant containing a primary amine and a tertiary amine to separate the scandium-containing acidic solution into a scandium-containing liquid extraction residue and a post-extraction extractant.

(2) A second aspect of the present invention is the scandium purification method according to the first aspect, in which the mixed extractant contains the tertiary amine at a proportion of 20% by volume or more and less than 100% by volume with respect to the primary amine.

(3) A third aspect of the present invention is the scandium purification method according to the first or second aspect, in which the primary amine is represented by a general formula $NH_2R$, where R denotes a branched alkyl group having from 16 to 22 carbon atoms.

(4) A fourth aspect of the present invention is the scandium purification method according to any one of the first to third aspects, in which the tertiary amine is tri-normal-octylamine.

(5) A fifth aspect of the present invention is the scandium purification method according to any one of the first to fourth aspects, including a scrubbing step of washing the post-extraction extractant, in which a volume ratio (Os/As) of the post-extraction extractant (Os) to a washing liquid (As) is set to 2 or more and 10 or less in the scrubbing step.

(6) A sixth aspect of the present invention is the scandium purification method according to the fifth aspect, including a washing step of washing an extractant obtained after a backward extraction treatment of the post-extraction extractant, in which a washing treatment is performed using a post-washing liquid discharged in the scrubbing step as a washing liquid in the washing step and an extractant obtained after a washing treatment in the washing step is reused as the mixed extractant to be used in the solvent extraction.

(7) A seventh aspect of the present invention is the scandium purification method according to any one of the first to sixth aspects, in which the acidic solution is an eluate obtained by allowing a scandium-containing solution to pass through an ion exchange resin and then eluting scandium from the ion exchange resin.

(8) An eighth aspect of the present invention is the scandium purification method according to any one of the first to seventh aspects, further including a step of adding oxalic acid to the liquid extraction residue to generate a precipitate containing scandium oxalate and then roasting the precipitate to obtain scandium oxide.

Effects of the Invention

According to the present invention, it is possible to provide a simple and economical scandium purification method, by which it is possible to separate both elements of thorium and uranium from a scandium-containing acidic solution in one step.

BRIEF DESCRIPTION OF THE DRAWINGS

Fig. 1 is a flowchart which illustrates an example of application examples of a scandium purification method.
Fig. 2 is a graph which shows the transition of a separation factor $\alpha$ of uranium and a concentration of uranium in a liquid extraction residue with respect to an amount of a tertiary amine mixed.
Fig. 3 is a graph which shows the transition of a separation factor $\alpha$ of thorium and a concentration of thorium in a liquid extraction residue with respect to an amount of a tertiary amine mixed.
Fig. 4 is a graph which shows an example of plotting of the extraction behavior of uranium by the McCabe-Thiele method.
Fig. 5 is a graph which shows an example of plotting of the extraction behavior of thorium by the McCabe-Thiele method.
Fig. 6 is a graph which shows the recovery rates of scandium, thorium, and uranium with respect to the washing liquid (As)/post-extraction extractant (Os).

PREFERRED MODE FOR CARRYING OUT THE INVENTION

Hereinafter, specific embodiments of the present invention (hereinafter referred to as the "present embodiments") will be described in detail, but the present invention is not limited to the following embodiments at all and can be implemented with appropriate modifications without departing from the gist of the present invention. Incidentally, in the present specification, the notation "X to Y" (X and Y are arbitrary numerical values) means "X or more and Y or less".

<<1. Scandium purification method>>

The scandium purification method according to the present embodiment is a method of purifying scandium by subjecting a scandium-containing acidic solution to a specific solvent extraction treatment. Specifically, in this scandium purification method, the scandium-containing acidic solution is subjected to solvent extraction using an extractant (hereinafter referred to as a "mixed extractant") in which a primary amine and a tertiary amine are mixed together and thus separated into a scandium-containing liquid extraction residue and a post-extraction extractant.

By such a solvent extraction treatment, impurities contained in the acidic solution, particularly thorium (Th) and uranium (U), which are actinide elements, can be extracted into the mixed extractant and effectively separated from scandium, which is to remain in the acidic solution after the extraction. In other words, both components of thorium and uranium can be extracted and separated from scandium by a simple operation in one step, and high purity scandium can be efficiently purified.

In addition, it is possible to increase the extraction efficiency of thorium and uranium and the purification efficiency of scandium preferably, by setting the mixing proportion of the tertiary amine to the primary amine to 20% by volume or more and less than 100% by volume in the mixed extractant.

Here, the scandium-containing acidic solution to be subjected to solvent extraction is not particularly limited, but examples thereof may include a solution to be obtained by subjecting a slurry of nickel oxide ore to a leaching treatment using an acid such as sulfuric acid in a hydrometallurgical process of nickel oxide ore. Incidentally, examples of this solution may include a leachate to be obtained through the leaching treatment in a hydrometallurgical process and a post-sulfurization liquid obtained after a neutralization treatment is conducted to remove impurity components from the leachate and a sulfide containing nickel is recovered by adding a sulfurizing agent to the post-neutralization liquid obtained. These solutions are acidic solutions configured to contain an acid such as a sulfuric acid and are scandium-containing acidic solutions derived from nickel oxide ore.

«2. Application example of scandium purification method»

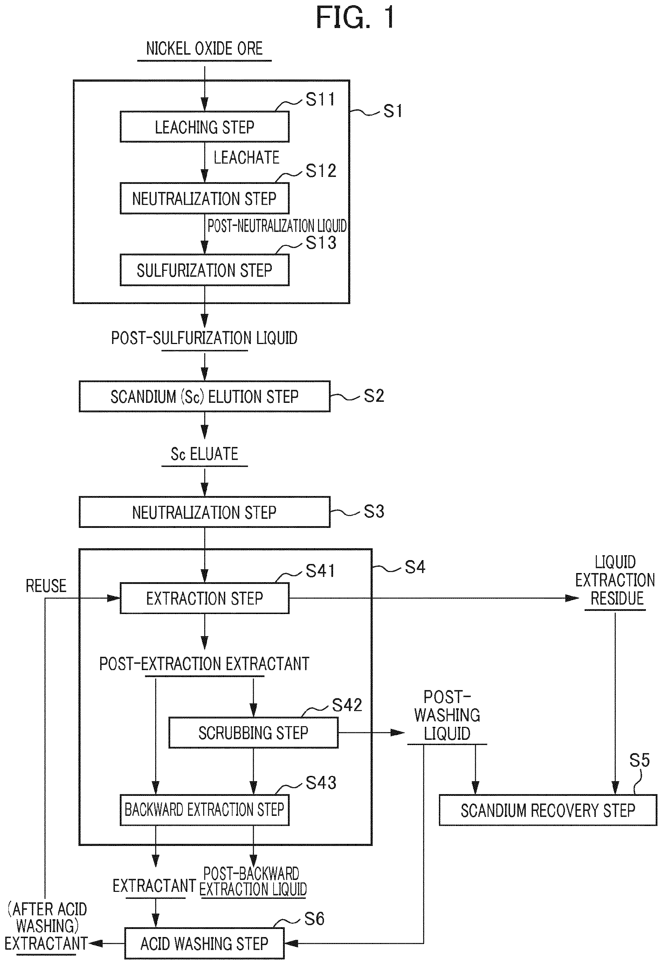

Fig. 1 is a flowchart which illustrates an application example of the scandium purification method according to the present embodiment and is a diagram of an example of the process in which the acidic solution obtained through a treatment to concentrate scandium based on the post-sulfurization liquid obtained through the hydrometallurgical process of nickel oxide ore is subjected to a solvent extraction treatment and scandium is recovered from the liquid extraction residue obtained by the solvent extraction.

Specifically, the scandium recovery process illustrated in Fig. 1 includes a hydrometallurgical treatment step S1 of obtaining a scandium-containing acidic solution by leaching nickel oxide ore using an acid such as sulfuric acid, a scandium elution step S2 of removing impurities from the acidic solution obtained and thus obtaining a scandium eluate in which scandium is concentrated, a solvent extraction step S4 of subjecting the scandium-containing acidic solution to solvent extraction using a specific extractant, and a scandium recovery step S5 of recovering scandium from a liquid extraction residue. Incidentally, it is possible to include a treatment (neutralization step S3) to increase the concentration of scandium by adding a neutralizing agent to the scandium eluate and performing a neutralization treatment prior to the solvent extraction step S4. In addition, in the solvent extraction step S4, it is also possible to backward extract the impurities from the post-extraction extractant obtained (backward extraction step S43), to wash the extractant after this backward extraction (acid washing step S6), and to reuse the extractant washed in the extraction step S41.

<2-1. Hydrometallurgical treatment step>

As the scandium-containing acidic solution to be the target of treatment in the scandium purification, it is possible to use a solution to be obtained through a hydrometallurgical process of nickel oxide ore such as a sulfuric acid acidic solution to be obtained by leaching nickel oxide ore using sulfuric acid as described above.

Specifically, as the scandium-containing acidic solution, it is possible to use a post-sulfurization liquid to be obtained by the hydrometallurgical treatment step S1 which includes a leaching step S11 of leaching nickel oxide ore using sulfuric acid at a high temperature and a high pressure and obtaining a leachate, a neutralization step S12 of adding a neutralizing agent to the leachate and obtaining a neutralization precipitate containing impurities and a post-neutralization liquid, and a sulfurization step S13 of adding a sulfurizing agent to the post-neutralization liquid and obtaining a nickel sulfide and a post-sulfurization liquid. Hereinafter, the flow of the hydrometallurgical treatment step S1 will be briefly described.

(1) Leaching step

The leaching step S11 is a step of adding sulfuric acid to a slurry of nickel oxide ore and performing a stirring treatment at a temperature of from 240°C to 260°C using, for example, a high-temperature pressure vessel (autoclave) to form a leach slurry containing a leachate and a leach residue. Incidentally, the treatment in the leaching step S11 may be performed in accordance with the conventionally known HPAL process and is described, for example, in Patent Document 1.

Here, examples of nickel oxide ore may include so-called laterite ores such as limonite ore and saprolite ore. The content of nickel in laterite ore is usually from 0.8% to 2.5% by weight, and nickel is contained as a hydroxide or a silica magnesia (magnesium silicate) mineral. In addition, these nickel oxide ores contain scandium.

In the leaching step S11, the leach slurry which contains a leachate and a leach residue and is thus obtained is separated into a leachate containing nickel, cobalt, scandium, and the like and a leach residue which is hematite by solid-liquid separation while being washed. In this solid-liquid separation treatment, for example, the leach slurry is mixed with a washing liquid, and then the solid-liquid separation treatment can be performed by utilizing a solid-liquid separation facility such as a thickener using a coagulant to be supplied from a coagulant supply facility and the like.

(2) Neutralization step

The neutralization step S12 is a step of adding a neutralizing agent to the leachate obtained to adjust the pH and obtaining a neutralization precipitate containing impurity elements and a post-neutralization liquid. By the neutralization treatment in this neutralization step S12, valuable metals such as nickel, cobalt, and scandium are contained in the post-neutralization liquid while most impurities including iron and aluminum are converted into a neutralization precipitate.

As the neutralizing agent, conventionally known ones can be used, and examples thereof may include calcium carbonate, slaked lime, and sodium hydroxide.

(3) Sulfurization step

The sulfurization step S13 is a step of adding a sulfurizing agent to the post-neutralization liquid obtained through the neutralization step S12 described above and obtaining nickel sulfide and a post-sulfurization liquid. By the sulfurization treatment in this sulfurization step S13, nickel, cobalt, zinc and the like are converted into sulfides and scandium is contained in the post-sulfurization liquid.

Specifically, in the sulfurization step S13, a sulfurizing agent such as gaseous hydrogen sulfide, sodium sulfide, or hydrogenated sodium sulfide is added to the post-neutralization liquid obtained and a sulfide (nickel·cobalt mixed sulfide) containing nickel and cobalt with less impurity components and a post-sulfurization liquid which has a low and stabilized level of nickel concentration and contains scandium are generated.

In the sulfurization treatment in the sulfurization step S13, the slurry of nickel·cobalt mixed sulfide is subjected to a settling separation treatment using a settling separation apparatus such as a thickener to separate and recover nickel·cobalt mixed sulfide from the bottom of the thickener. Meanwhile, the post-sulfurization liquid, which is an aqueous solution component, is recovered by being allowed to overflow.

In the scandium purification method according to the present embodiment, the post-sulfurization liquid to be obtained through the respective steps in the hydrometallurgical treatment step S1 of nickel oxide ore as described above can be used as an acidic solution which contains scandium and other impurities and is a target of the scandium purification treatment.

<2-2. Scandium elution step>

As described above, a post-sulfurization liquid, which is a scandium-containing acidic solution and is obtained by leaching nickel oxide ore using sulfuric acid can be applied as a target solution of the scandium purification treatment. However, the post-sulfurization liquid, which is a scandium-containing acidic solution, contains, for example, aluminum and chromium remaining in the solution without being sulfurized by the sulfurization treatment in the sulfurization step S13 described above and other impurities of various kinds and various forms in addition to scandium. For this reason, it is preferable to concentrate scandium in advance by removing the impurities contained in the acidic solution as the scandium elution step S2 when this acidic solution is subjected to solvent extraction.

For example, in the scandium elution step S2, a scandium eluate in which scandium is concentrated can be obtained by allowing the post-sulfurization liquid obtained through the sulfurization step S13 in the hydrometallurgical treatment step S1 to pass through, for example, an ion exchange resin using a chelating resin to adsorb scandium and other impurities in the post-sulfurization liquid to the ion exchange resin and then eluting only scandium from the ion exchange resin using a strong acid such as sulfuric acid.

In such an ion exchange treatment, the kind of chelating resin to be used is not particularly limited, and for example, a resin having iminodiacetic acid as a functional group can be used. In addition, it is preferable to maintain the normality of sulfuric acid to be used as an eluent in a range of 0.3 N or more and less than 3 N when obtaining a scandium eluate.

<2-3. Neutralization step>

In the scandium elution step S2 described above, scandium and impurities are separated from each other by the selectivity of the chelating resin and scandium separated from the impurities is recovered as an eluate, but not all impurities can be completely separated from scandium because of the properties of the chelating resin to be used. In particular, actinide elements such as thorium and uranium behave in the same manner as scandium and are hardly separated from scandium.

Hence, in the present embodiment, it is possible to further promote the separation of scandium and impurities from each other by subjecting the scandium eluate recovered in the scandium elution step S2 to solvent extraction as an extraction starting liquid in a solvent extraction treatment (solvent extraction step S4 to be described later).

Meanwhile, in the solvent extraction treatment, the performance of separating the intended component from impurities other than the intended component is generally improved as the concentration of the intended component in the extraction starting liquid of the target of treatment is higher. In addition, when the amount of scandium to be treated is the same, the amount of liquid to be subjected to solvent extraction can be decreased as the extraction starting liquid contains scandium at a higher concentration, and as a result, the amount of extractant to be used can be decreased. Furthermore, there are also various merits such as improvement in the operation efficiency so that the facility required for the solvent extraction treatment can be more compact.

For this reason, in order to increase the concentration of scandium in the scandium eluate, that is, in order to concentrate scandium, in the scandium elution step S2, for example, it is preferable that a neutralizing agent is added to the scandium eluate eluted from the chelating resin to adjust the pH and a neutralization treatment is thus performed (neutralization step S3).

Specifically, in the neutralization step S3, a precipitate of scandium hydroxide is formed by adding a neutralizing agent to the scandium eluate and thus adjusting the pH to a predetermined range. Thereafter, it is possible to obtain a solution having a high scandium concentration by adding an acid to the precipitate of scandium hydroxide obtained to redissolve the precipitate. It is possible to improve the treatment efficiency of solvent extraction by performing the neutralization step S3 in which the scandium eluate is subjected to a neutralization treatment and scandium is thus concentrated prior to the solvent extraction step S4 in this manner. Incidentally, in such a neutralization step S3, an effect of separating the impurities which have not been converted into a precipitate can also be expected by forming a precipitate containing scandium once from the scandium eluate and performing solid-liquid separation.

The neutralizing agent is not particularly limited, and, for example, sodium hydroxide can be used. The acid for dissolving the neutralization precipitate is not particularly limited, but it is preferable to use sulfuric acid. Incidentally, the re-dissolution solution is a scandium sulfate solution in the case of using sulfuric acid.

<2-4. Solvent extraction step>

Next, in the solvent extraction step S4, the scandium eluate obtained through the scandium elution step S2 or the re-dissolution solution obtained through the neutralization step S3 in which the scandium eluate is subjected to a neutralization treatment is brought into contact with a specific extractant and a solvent extraction treatment is performed. Incidentally, the scandium eluate and re-dissolution solution to be subjected to solvent extraction are acidic solutions containing impurity elements such as thorium and uranium in addition to scandium as described above, and these are hereinafter referred to as "scandium-containing solutions".

The mode in the solvent extraction step S4 is not particularly limited, but it is preferable to perform a solvent extraction treatment which includes an extraction step S41 of subjecting the scandium-containing solution to solvent extraction using a specific extractant and separating the scandium-containing solution into a post-extraction extractant into which impurities and a slight amount of scandium are extracted and a liquid extraction residue in which scandium remains, a scrubbing step S42 of mixing the post-extraction extractant with a washing liquid, separating a slight amount of scandium extracted into the post-extraction extractant into the washing liquid (aqueous phase), and thus obtaining a post-washing liquid, and a backward extraction step S43 of adding a backward extractant to the post-extraction extractant and backward extracting the impurities from the post-extraction extractant, for example, as illustrated in Fig. 1.

(1) Extraction step

In the extraction step S41, a scandium-containing solution is mixed with an organic solvent (extraction solvent) containing a specific extractant and thus a post-extraction extractant into which impurities, particularly thorium (Th) and uranium (U) have been selectively extracted and a scandium-containing liquid extraction residue are obtained.

[Mixed extractant]

In the extraction step S41, an extractant (hereinafter referred to as the "mixed extractant") containing a primary amine and a tertiary amine in mixture is used. It is possible to simultaneously, efficiently, and effectively extract impurities such as thorium and uranium and to separate the impurities from scandium in one step by performing the solvent extraction treatment using the mixed extractant in this manner.

Specifically, for example, in the case of an extractant using a primary amine singly, uranium is hardly extracted although the extraction rate of thorium is high. On the other hand, in the case of an extractant using a tertiary amine singly, the extraction rate of thorium is low although the extraction rate of uranium is high and the separation property thereof from scandium is also favorable. It is difficult to simultaneously extract impurities such as thorium and uranium and to efficiently separate the impurities from scandium in one step in the case of using a primary amine or a tertiary amine singly. In contrast, it is possible to extract impurities such as thorium and uranium into the extractant and to efficiently separate the impurities from scandium to be transferred to the liquid extraction residue in one step by using a mixed extractant in which a primary amine and a tertiary amine are mixed together.

As a primary amine to be used in the mixed extractant, it is possible to preferably use, for example, an amine-based extractant represented by a general formula $NH_2R$, where R denotes a branched alkyl group having from 16 to 22 carbon atoms. Specifically, trade name: Primene JM-T (manufactured by The Dow Chemical Company) and the like can be suitably used.

In addition, as a tertiary amine to be used in the mixed extractant, it is possible to preferably use, for example, tri-normal-octylamine (hereinafter, also referred to as "TNOA"). Specifically, trade name: Fermin T-08 (manufactured by Kao Corporation) and the like can be suitably used.

Here, the extraction behavior in a case in which a primary amine is singly used as the extractant is different from that in a case in which a tertiary amine is singly used as the extractant, and thus the solvent extraction using a mixed extractant of a primary amine and a tertiary amine does not necessarily exhibit the extraction behavior to be a simple sum of those in these cases. This can be clearly understood from the results in Examples and Comparative Examples to be described later.

For this reason, it is preferable that the mixed extractant is formed by mixing a primary amine and a tertiary amine in specific proportions, and this makes it possible to more effectively extract thorium and uranium. Specifically, a mixed extractant is formed by containing a tertiary amine preferably at a proportion of 20% by volume or more and less than 100% by volume and more preferably at a proportion of 20% by volume or more and 60% by volume or less with respect to a primary amine.

With regard to the content proportions in the mixed extractant, the extraction rate of uranium tends to decrease when the content of tertiary amine with respect to the content of primary amine is less than 20% by volume. In addition, the extraction rate of thorium tends to decrease when the content of tertiary amine with respect to the content of primary amine is 100% by volume or more.

When using the mixed extractant in solvent extraction, it is preferable to use the mixed extractant by being diluted with, for example, a hydrocarbon-based organic solvent as described above. Incidentally, hereinafter one obtained by diluting the mixed extractant with an organic solvent is called an "extraction solvent". Specifically, when the phase separation property and the like at the time of extraction and at the time of backward extraction to be described later are taken into consideration, the mixed extractant is diluted so that the concentration of the mixed extractant in the extraction solvent is preferably about 1% by volume or more and 10% by volume or less and more preferably about 5% by volume or more and 9% by volume or less.

In addition, at the time of extraction, the proportion of the extraction solvent (O) with respect to the scandium-containing solution (A) is not particularly limited, but the volume ratio O/A is preferably 0.5 or less. When the extraction solvent (O) and the scandium-containing solution (A) are brought into contact with each other at proportions to have a volume ratio O/A of more than 0.5, there is the possibility that scandium is likely to be extracted into the mixed extractant and the separation property from thorium and uranium decreases.

(2) Scrubbing (washing) step

In the extraction step S41 described above, in a case in which scandium slightly coexists in the post-extraction extractant into which the impurities have been extracted from the scandium-containing solution, it is preferable that the post-extraction extractant obtained through the extraction treatment in the extraction step S41 is subjected to a scrubbing (washing) treatment to separate scandium into a washing liquid and to recover scandium into a post-washing liquid (scrubbing step S42) before backward extracting the post-extraction extractant.

It is possible to further increase the recovery rate of scandium by providing the scrubbing step S42, thus washing the post-extraction extractant and separating a slight amount of scandium extracted into the mixed extractant into the washing liquid in this manner.

A sulfuric acid solution, a hydrochloric acid solution and the like can be used as a washing liquid to be used in scrubbing. In addition, it is also possible to use one to which a water-soluble chloride or sulfate is added. Specifically, in the case of using a sulfuric acid solution as the washing liquid, it is preferable to use one having a concentration range of 0.1 mol/L or more and 3.0 mol/L or less.

The number of washing stages (number of washing times) also depends on the kind and concentration of impurity elements and thus can be appropriately changed depending on the kind of the mixed extractant containing a primary amine and a tertiary amine, the extraction conditions, and the like used. For example, in a case in which the volume ratio Os/As of the post-extraction extractant (referred to as "Os") to the washing liquid (referred to as "As") is set to 1 (1/1), scandium extracted into the post-extraction extractant can be separated to a concentration less than the lower detection limit of the analyzer by setting the number of washing stages to about 3 to 5 stages.

At this time, as apparent from Examples to be described later, when the volume ratio Os/As is set to a value less than 1, it is impossible to recover only scandium since thorium and uranium are extracted into the post-washing liquid. In contrast, it is possible to decrease thorium and uranium extracted into the post-washing liquid and to selectively recover scandium by setting the volume ratio Os/As to 1 or more. Furthermore, it is possible to decrease the recovery rate of uranium to less than 10% and the recovery rate of thorium to less than 1% by setting the volume ratio Os/As to 2 or more. On the other hand, it is not preferable that the volume ratio Os/As is great from the viewpoint of cost, scale of the facility, and the like since the amount of the organic solvent required is increased by that amount. For this reason, in the scrubbing step S42, the post-extraction extractant is washed with a washing liquid by setting the volume ratio Os/As to preferably from 2 to 10 and more preferably from 2 to 4.

(3) Back extraction step

In the backward extraction step S43, the impurities are back-extracted from the post-extraction extractant into which the impurities have been extracted in the extraction step S41. Specifically, in the backward extraction step S43, a reaction reverse to that in the extraction treatment in the extraction step S41 is caused by adding and mixing the backward extraction solution (backward extraction starting liquid) with the post-extraction extractant containing the mixed extractant, and the impurities are back-extracted and a post-backward extraction liquid containing the impurities is obtained.

As described above, in the extraction treatment in the extraction step S41, impurities such as thorium and uranium are selectively extracted using a mixed extractant. It is preferable to use a solution containing a carbonate such as sodium carbonate or potassium carbonate as the backward extraction solution from the viewpoint of effectively separating impurities such as uranium and thorium and regenerating the extractant.

The concentration of the solution which contains a carbonate and is a backward extraction solution, is preferably, for example, about 0.5 mol/L or more and 2 mol/L or less from the viewpoint of suppressing excessive use.

Incidentally, in the case of subjecting the post-extraction extractant to a scrubbing treatment in the scrubbing step S42 described above, the backward extraction treatment can be performed by adding and mixing the backward extraction solution to the post-extraction extractant after being subjected to scrubbing in the same manner.

<2-5. Scandium recovery step>

Next, in the scandium recovery step S5, scandium is recovered from the liquid extraction residue obtained through the extraction step S41 in the solvent extraction step S4 and the post-washing liquid obtained after the scrubbing in the case of performing scrubbing in the scrubbing step S42.

The scandium recovery method is not particularly limited and any known method can be used, but examples thereof may include a method in which neutralization is performed by addition of an alkali and scandium is recovered as a precipitate of scandium hydroxide and a method in which scandium is recovered as a precipitate of an oxalate using an oxalic acid solution (oxalate formation treatment).

In the recovery method using an oxalate formation treatment, a precipitate of scandium oxalate may be generated by adding oxalic acid to the liquid extraction residue and the post-washing liquid and then the scandium oxalate generated may be dried and roasted to recover scandium as scandium oxide.

The amount of oxalic acid added in the oxalate formation treatment is preferably set to, for example, an amount to be 1.05 times or more and 1.2 times or less the equivalent required to precipitate scandium contained in the liquid extraction residue and the like as an oxalate. Incidentally, the amount of oxalic acid $((COOH)_2)$ required to convert scandium into scandium oxalate $(SC_2(C_2O_4)_3)$ is defined as one equivalent.

In addition, as conditions for the roasting treatment of scandium oxalate obtained, for example, scandium oxalate may be placed in a tubular furnace and heated at about 900°C for about 2 hours. Incidentally, it is industrially preferable to use a continuous furnace such as a rotary kiln since drying and roasting can be performed by the same apparatus.

<2-6. Acid washing step>

The extractant to be obtained through the backward extraction step S43 described above can be repeatedly used again as an extractant (mixed extractant) in the extraction step S41.

In the acid washing step S6, the extractant obtained through the backward extraction step S43 is acid-washed using an acid washing liquid before being reused in the extraction step S41. As the acid washing liquid, an acidic solution such as a sulfuric acid solution or a hydrochloric acid solution can be used. This makes it possible to remove Na incorporated in the extractant and to regenerate the extractant. Incidentally, the solution obtained after recovering the extractant through this acid washing step S6 is a sulfuric acid acidic solution and the like and can be thus utilized as, for example, a neutralizing agent for the backward extraction solution described above, and it is not required to add a fresh neutralizing agent and it is possible to perform an efficient operation.

Here, as the acid washing liquid to be used in washing of the extractant in the acid washing step S6, the post-washing liquid discharged in the scrubbing step S42 described above may be used. The washing liquid to be used in the scrubbing step S42 is an acid solution such as a sulfuric acid solution or a hydrochloric acid solution, and the post-washing liquid to be discharged after scrubbing is also derived from these acid solutions.

Moreover, the post-washing liquid discharged in the scrubbing step S42 is obtained by washing and recovering scandium which has been co-extracted into the post-extraction extractant to be obtained through the extraction step S41, and contains scandium. Hence, it is possible to improve the recovery rate of scandium by using such a post-washing liquid containing scandium as a washing liquid for the extractant after the backward extraction in the acid washing step S6.

In other words, in the acid washing step S6, by using the post-washing liquid discharged in the scrubbing step S42 as a washing liquid to perform acid washing of the extractant after the backward extraction, for example, scandium contained in the post-washing liquid used as the washing liquid is extracted into the extractant washed as well as impurities resulting from the backward extraction using the backward extraction solution (alkaline solution) in the backward extraction step S43 are removed and purified. Moreover, by reusing the extractant which has been washed by such an acid washing treatment and into which scandium has been extracted as an extractant in the extraction step S41, it is possible to increase the recovery rate of scandium in the liquid extraction residue to be obtained through the extraction treatment in the extraction step S41 as compared with a case in which a new acidic solution such as a sulfuric acid solution is used as the washing liquid. Specifically, the recovery rate can be increased by the amount of scandium contained in the post-washing liquid used as the washing liquid.

In addition, there is the possibility that a small amount of impurity components such as uranium and thorium are contained in the post-washing liquid discharged in the scrubbing step S42. For this reason, in the case of transferring the entire amount of such a post-washing liquid to the scandium recovery step S5 and attempting to recover scandium, there is also the possibility that impurity components may be incorporated into the solution of the target of recovery and this leads to a decrease in the purity of scandium. In contrast, by using at least a part (or may be the whole amount) of the post-washing liquid discharged in the scrubbing step S42 as the washing liquid in the acid washing treatment in the acid washing step S6, the impurity components such as uranium and thorium contained in a small amount in the post-washing liquid are also extracted into the extractant and appropriately separated through the extraction step S41 to be repeatedly performed for reuse. This makes it possible to more effectively suppress a decrease in the purity of scandium to be recovered as well as to improve the recovery rate of scandium.

Furthermore, by using the post-washing liquid as the washing liquid in the acid washing step S6, it is possible to efficiently recover scandium without sending the whole amount of the post-washing liquid discharged from the scrubbing step S42 to the scandium recovery step S5, also to adjust the concentration of impurities as described above, and thus to economically recover scandium without taking time and effort.

EXAMPLES

Hereinafter, the present invention will be described in more detail with reference to Examples, but the present invention is not limited to these Examples at all.

<Preparation of scandium-containing solution (extraction starting liquid)>

Based on a known method such as the method described in Patent Document 1, sulfuric acid was added to a slurry of nickel oxide ore, a leaching treatment was performed at a high temperature and a high pressure, the pH of the leachate obtained was adjusted, and the impurities were removed. Thereafter, a sulfurizing agent was added to the leachate to precipitate nickel as a sulfide, and the sulfide was separated from the leachate to obtain a post-sulfurization liquid.

Next, the post-sulfurization liquid obtained was subjected to an ion exchange treatment using a chelating resin by a known method to separate impurities, and at the same time, to perform a scandium concentration treatment. Incidentally, in order to confirm the purification effect in the present Example, the extraction starting liquid having the composition presented in the following Table 1 was prepared by adding reagents and the like for the components which were not contained in sufficient amounts.

[Table 1]

|  | Concentration | | | | | | | pH |
|---|---|---|---|---|---|---|---|---|
|  | Sc | Al | Fe | Ni | Cr | U | Th |  |
|  | (g/L) | | | | | (mg/L) | |  |
| Extraction starting liquid | 12.6 | 12.3 | 0.56 | 0.09 | 0.36 | 210 | 70 | 1 .00 |

<Preparation of extraction solvent>

Extraction solvents used in Examples and Comparative Examples were prepared according to the compositions presented in the following Table 2. Incidentally, Primene JM-T (manufactured by The Dow Chemical Company) was used as a primary amine constituting the mixed extractant, and TNOA (Pharmin T-08 manufactured by Kao Corporation) was used as a tertiary amine. Moreover, an extraction solvent was prepared by diluting this mixed extractant with an organic solvent (diluent). Incidentally, SWASOL 1800 (manufactured by MARUZEN PETROCHEMICAL CO., LTD.) was used as the organic solvent.

[Table 2]

|  | Extraction solvent (% by volume) | | |
|---|---|---|---|
|  | Primary amine | Tertiary amine | Organic solvent |
| Example 1 | 5 | 5 | 90 |
| Example 2 | 2.5 | 2.5 | 95 |
| Example 3 | 5 | 2 | 93 |
| Example 4 | 5 | 1 | 94 |
| Comparative Example 1 | 5 | 0 | 95 |
| Comparative Example 2 | 0 | 5 | 95 |

<Extraction step>

The extraction starting liquid (A) presented in Table 1 and the extraction solvent (O) of each Example and Comparative Example presented in Table 2 were respectively taken into 100 mL separatory funnels at the volume ratio O/A presented in the following Table 3. These were shaken (mixed) for 10 minutes using a shaker and allowed to still stand for 10 minutes after being shaken.

[Table 3]

|  | O/A | Amount of extraction solvent (mL) | Amount of extraction starting liquid (mL) |
|---|---|---|---|
| Extraction 1 | 4/1 | 80 | 20 |

(continued)

|  | O/A | Amount of extraction solvent (mL) | Amount of extraction starting liquid (mL) |
|---|---|---|---|
| Extraction 2 | 2/1 | 40 | 20 |
| Extraction 3 | 1/1 | 20 | 20 |
| Extraction 4 | 1/2 | 20 | 40 |
| Extraction 5 | 1/4 | 20 | 80 |

Thereafter, the post-extraction extractant and the liquid extraction residue were respectively transferred to a measuring cylinder, and the liquid amount was confirmed. The post-extraction extractant and liquid extraction residue recovered were naturally filtered through qualitative filter paper (post-extraction extraction solvent: 1 PS, liquid extraction residue: 5C) and the concentrations of major components in the post-extraction extractant and liquid extraction residue were measured by emission spectral analysis to confirm the concentrations of scandium (Sc), uranium (U), and thorium (Th) in the liquid extraction residue and the extraction rates thereof. The results are presented in Tables 4 to 6.

[Table 4]

|  | O/A | Concentration of liquid extraction residue | | | Extraction rate (%) | | |
|---|---|---|---|---|---|---|---|
|  |  | Sc (g/L) | U | Th | Sc | U | Th |
|  |  |  | (mg/L) | | | | |
| | 4/1 | 7.2 | 0.8 | 2.7 | 43.2 | 99.6 | 96.1 |
| | 2/1 | 9.7 | 0.8 | 7 | 23.2 | 99.6 | 89.5 |
| Example 1 | 1/1 | 11.2 | 1.0 | 15 | 11.2 | 99.5 | 78.4 |
| | 1/2 | 12.0 | 1.6 | 25 | 4.8 | 99.2 | 64.9 |
| | 1/4 | 12.1 | 4 | 37 | 4.0 | 98.2 | 47.3 |
| | 4/1 | 9.3 | 0.5 | 4.7 | 26.0 | 99.8 | 93.2 |
| | 2/1 | 10.6 | 0.7 | 10 | 16.0 | 99.7 | 85.1 |
| Example 2 | 1/1 | 11.5 | 1.2 | 19 | 8.4 | 99.4 | 73.0 |
| | 1/2 | 12.1 | 3.5 | 33 | 3.8 | 98.3 | 52.7 |
| | 1/4 | 12.6 | 14 | 44 | 0.0 | 93.2 | 37.8 |

[Table 5]

|  | O/A | Concentration of liquid extraction residue | | | Extraction rate (%) | | |
|---|---|---|---|---|---|---|---|
|  |  | Sc (g/L) | U | Th | Sc | U | Th |
|  |  |  | (mg/L) | | | | |
| | 4/1 | 6.6 | 1.5 | 1.8 | 47.7 | 99.3 | 97.5 |
| | 2/1 | 9.4 | 1.7 | 5.2 | 25.8 | 99.2 | 92.5 |
| Example 3 | 1/1 | 10.9 | 2.8 | 12 | 13.3 | 98.7 | 83.1 |
| | 1/2 | 12.0 | 7.6 | 21 | 4.7 | 96.4 | 70.4 |
| | 1/4 | 12.4 | 39 | 35 | 1.6 | 81.4 | 50.7 |

(continued)

|  | O/A | Concentration of liquid extraction residue | | | Extraction rate (%) | | |
|---|---|---|---|---|---|---|---|
|  |  | Sc (g/L) | U | Th | Sc | U | Th |
|  |  |  | (mg/L) | | | | |
| Example 4 | 4/1 | 6.4 | 5.0 | 1.4 | 49.2 | 97.6 | 98.0 |
|  | 2/1 | 9.5 | 8.0 | 4.1 | 24.6 | 96.2 | 94.1 |
|  | 1/1 | 11.2 | 21 | 10 | 11.1 | 90.0 | 86.3 |
|  | 1/2 | 12.1 | 72 | 20 | 4.0 | 65.7 | 71.4 |
|  | 1/4 | 12.5 | 140 | 30 | 0.8 | 33.3 | 57.1 |

[Table 6]

|  | O/A | Concentration of liquid extraction residue | | | Extraction rate (%) | | |
|---|---|---|---|---|---|---|---|
|  |  | Sc . (g/L) | U | Th | Sc | U | Th |
|  |  |  | (mg/L) | | | | |
| Comparative Example 1 | 4/1 | 1.3 | 210 | 0.1 | 89.8 | 0 | 99.8 |
|  | 2/1 | 5.6 | 210 | 0.3 | 55.4 | 0 | 99.6 |
|  | 1/1 | - | - | - | - | - | - |
|  | 1/2 | 10.5 | 210 | 1.6 | 15.7 | 0.1 | 97.8 |
|  | 1/4 | - | - | - | - | - | - |
| Comparative Example 2 | 4/1 | 12.4 | 0.2 | 58 | 1.6 | 99.9 | 17.1 |
|  | 2/1 | 12.6 | 0.3 | 63 | 0 | 99.9 | 10 |
|  | 1/1 | 12.6 | 0.4 | 66 | 0 | 99.8 | 5.7 |
|  | 1/2 | 12.6 | 0.7 | 67 | 0 | 99.7 | 4.3 |
|  | 1/4 | 12.6 | 1.7 | 69 | 0 | 99. 2 | 1.4 |

<Extraction rate>

First, as can be seen from the extraction results in Comparative Example 1 (see Table 6), the extraction rate of thorium is high but uranium is hardly extracted in the case of using the extractant composed only of a primary amine. On the other hand, as can be seen from the extraction results in Comparative Example 2 (see Table 6), the extraction rate of uranium is high and the separation property thereof from scandium is high but the extraction rate of thorium is low in the case of using the extractant composed only of a tertiary amine. In addition, even when the volume ratio O/A of the extraction solvent to the scandium-containing solution is increased to 4/1, the extraction ratio of thorium remains at about 17% and the extraction of scandium begins. From this fact, it can be seen that it is difficult to efficiently separate both uranium and thorium from scandium even when a primary amine or a tertiary amine is used singly as an extractant.

On the other hand, from comparison between Table 4 and Table 6, it has been confirmed that the extraction rates of scandium (Sc), uranium (uranium), and thorium (Th) in Example 1 using a mixed extractant in which a primary amine and a tertiary amine were mixed at 1 : 1 are not the simple sum of those in Comparative Example 1 and Comparative Example 2 although the amount of extractant is the same as those in Comparative Example 1 using a primary amine singly and Comparative Example 2 using a tertiary amine singly. From the extraction results in Example 1 and Example 2, it can be seen that the volume ratio O/A of the amount of extraction solvent to the amount of scandium-containing solution is preferably 1/2 or less from the viewpoint of the separation property of scandium. However, it has been confirmed that the extraction rate of thorium (Th) tends to decrease as the volume ratio O/A decreases.

In contrast, in Examples 3 and 4 (see Table 5) using a mixed extractant in which a primary amine and a tertiary amine are mixed at 5 : 2 or 5 : 1, a decrease in the extraction rate of thorium was smaller than in Examples 1 and 2 even when the volume ratio O/A of the extraction solvent to the scandium-containing solution was 1/2 or less. From these facts, it can be seen that it is easier to extract both uranium and thorium by decreasing the mixing ratio of the tertiary amine.

<Distribution coefficient and separation factor>

The extraction results by Extraction 4 (O/A = 1/2) in which the separation property of scandium is high and the extraction rates of uranium and thorium are high in each of Examples and Comparative Examples are summarized in the following Table 7. In addition, from the results presented in this Table 7, the distribution coefficient D and separation factor $\alpha$ of each of scandium, uranium, and thorium were calculated by the following equations. The results are presented in the following Table 8.

$$\text{Distribution coefficient } D_x = \text{component (x) concentration in post-extraction extraction solvent/component (x) concentration in liquid extraction residue}$$

$$\text{Separation factor } \alpha = \text{distribution coefficient } (D_x)/\text{distribution coefficient } (D_{Sc})$$

[Table 7]

| | Mixed extractant (% by volume) | | Concentration of liquid extraction residue | | | Concentration in post-extraction extractant | | |
|---|---|---|---|---|---|---|---|---|
| | Primary amine | Tertiary amine | Sc (g/L) | U | Th | Sc (g/L) | U | Th |
| | | | | (mg/L) | | | (mg/L) | |
| Example 1 | 5 | 5 | 12.0 | 1.6 | 25 | 1.2 | 417 | 91 |
| Example 2 | 2.5 | 2.5 | 12.1 | 3.5 | 33 | 1.0 | 413 | 74 |
| Example 3 | 5 | 2 | 12.0 | 7.6 | 21 | 1.2 | 405 | 99 |
| Example 4 | 5 | 1 | 12.1 | 72 | 20 | 1.0 | 276 | 100 |
| Comparative Example 1 | 5 | 0 | 10.5 | 210 | 1.6 | 4. 1 | 0.4 | 137 |
| Comparative Example 2 | 0 | 5 | 12.6 | 0.7 | 67 | 0 | 419 | 6 |

[Table 8]

| | Distribution coefficient D | | | Separation factor $\alpha$ | |
|---|---|---|---|---|---|
| | Dsc | Du | $D_{Th}$ | $D_U/D_{SC}$ | $D_{Th}/D_{SC}$ |
| Example 1 | 0.10 | 257 | 3.7 | 2547 | 37 |
| Example 2 | 0.08 | 117 | 2.2 | 1473 | 28 |
| Example 3 | 0.10 | 53 | 4.8 | 542 | 48 |
| Example 4 | 0.08 | 3.8 | 5.0 | 46 | 61 |
| Comparative Example 1 | 0.39 | 0.002 | 87 | 0 | 223 |
| Comparative Example 2 | 0 | 598 | 0.09 | - | - |

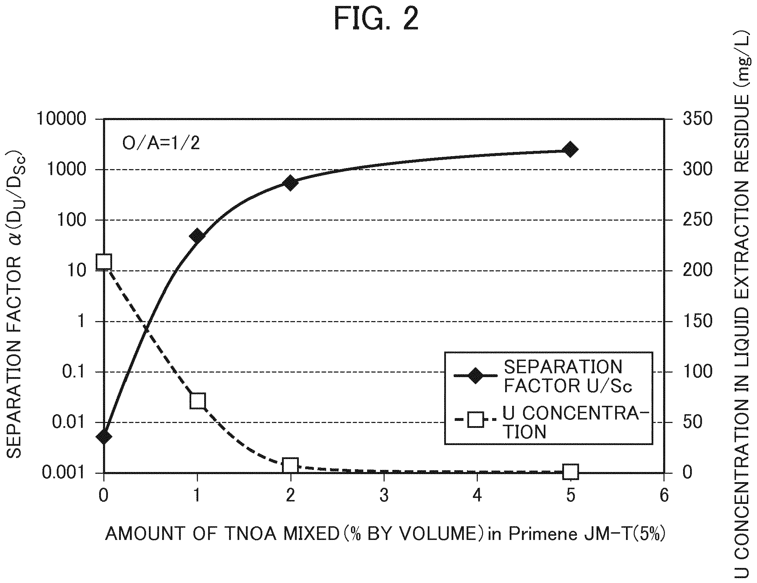

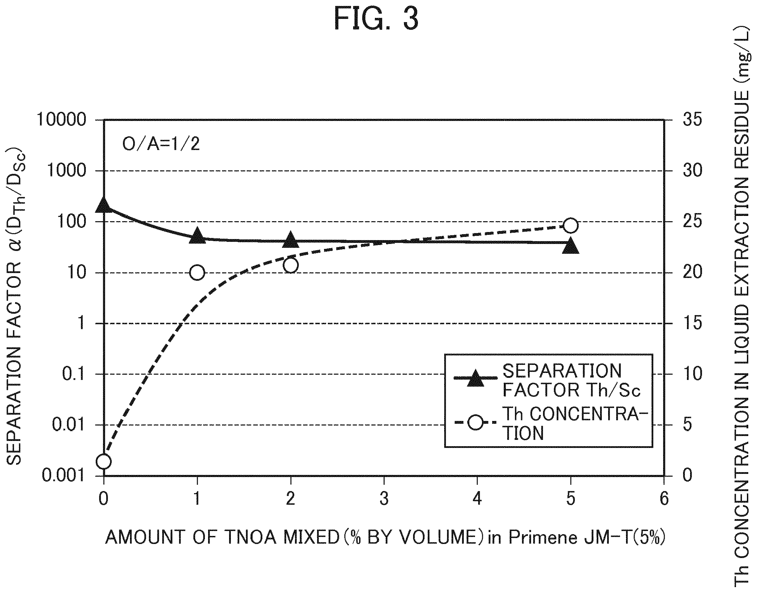

The transition of the respective separation factors α of uranium and thorium and the respective concentrations of uranium and thorium in the liquid extraction residue were examined in cases (Comparative Example 1 and Examples 1, 3, and 4) in which the mixing proportion of the primary amine was fixed at 5% by volume and the blending ratio of the tertiary amine was changed based on the results presented in Table 8. The respective results are shown in Fig. 2 and Fig. 3.

From the results in Fig. 2, it can be seen that a mixing proportion of 2% by volume is sufficient as the mixing proportion of the tertiary amine with respect to the entire mixed extractant in order to decrease the uranium concentration in the liquid extraction residue and to efficiently extract uranium. In addition, it can be seen that it is possible to efficiently extract uranium by mixing a tertiary amine at a proportion of 20% by volume with respect to 100% by volume of the primary amine in the relation with a primary amine.

In addition, it can be seen that it is preferable to set the mixing proportion of the tertiary amine to 1% by volume or more with respect to the entire mixed extractant in order to attain a separation factor α of scandium exceeding 1. In addition, it can be seen that it is possible to efficiently separate uranium from scandium by mixing a tertiary amine at a proportion of 10% by volume or more with respect to 100% by volume of the primary amine in the relation with a primary amine.

On the other hand, it can be seen from the results in Fig. 3 that the concentration of thorium in the liquid extraction residue increases along with an increase in the mixing ratio of the tertiary amine and the capability to extract thorium decreases. However, the separation factor from scandium is from 37 to 61 and is at such a level that thorium can be effectively separated from scandium and recovered in a case in which the mixing proportion of the tertiary amine is from 1% by volume to 5% by volume with respect to the entire mixed extractant.

<Number of solvent extraction stages>

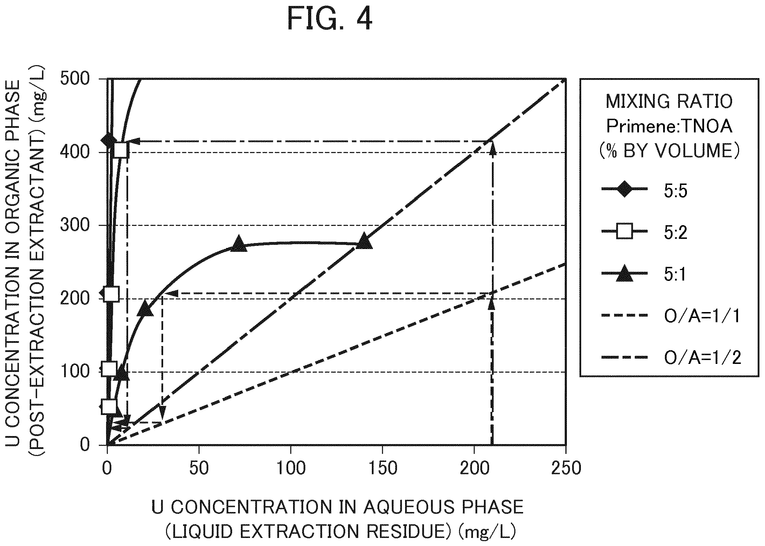

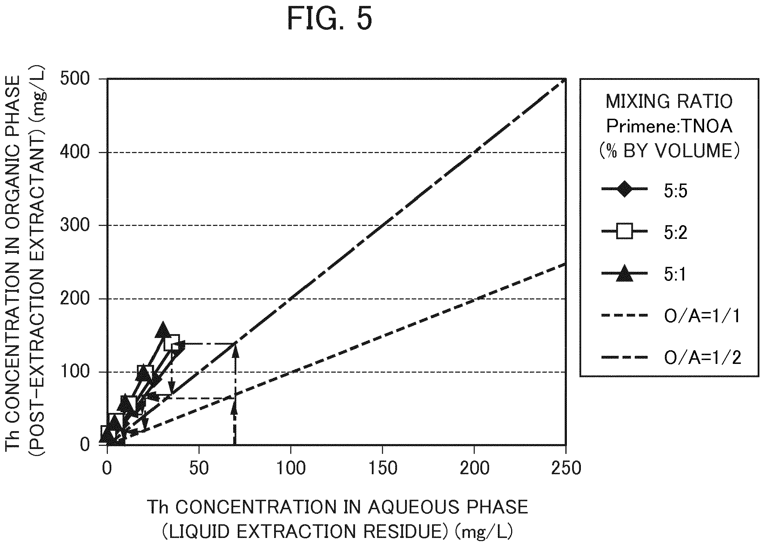

Based on the extraction results in Examples 1, 3, and 4 collectively presented in the following Table 9, plotting was performed by the McCabe-Thiele method. An example thereof is shown in Fig. 4 and Fig. 5. The number of stages required for solvent extraction was investigated from the results in Fig. 4 and Fig.5.

[Table 9]

| | O/A | Concentration of Liquid extraction residue | | | Concentration in post-extraction extractant | | |
|---|---|---|---|---|---|---|---|
| | | Sc (g/L) | U | Th | Sc (g/L) | U | Th |
| | | | (mg/L) | | | (mg/L) | |
| Example 1 | 4/1 | 7.2 | 0.8 | 2.7 | 1.4 | 52 | 17 |
| | 2/1 | 9.7 | 0.8 | 7.4 | 1.5 | 105 | 31 |
| | 1/1 | 11.2 | 1.0 | 15 | 1.4 | 209 | 55 |
| | 1/2 | 12.0 | 1.6 | 25 | 1.2 | 417 | 91 |
| | 1/4 | 12.1 | 4 | 37 | 2.0 | 825 | 132 |
| Example 3 | 4/1 | 6.6 | 1.5 | 1.8 | 1.5 | 52 | 17 |
| | 2/1 | 9.4 | 1.7 | 5.2 | 1.6 | 104 | 32 |
| | 1/1 | 10.9 | 2.8 | 12 | 1.7 | 207 | 58 |
| | 1/2 | 12.0 | 7.6 | 21 | 1.2 | 405 | 99 |
| | 1/4 | 12.4 | 39 | 35 | 0.8 | 684 | 142 |
| Example 4 | 4/1 | 6.4 | 5.0 | 1.4 | 1.6 | 51 | 17 |
| | 2/1 | 9.5 | 8.0 | 4.1 | 1.6 | 101 | 33 |
| | 1/1 | 11.2 | 21 | 10 | 1.4 | 189 | 60 |
| | 1/2 | 12.1 | 72 | 20 | 1.0 | 276 | 100 |
| | 1/4 | 12.5 | 140 | 30 | 0.4 | 280 | 160 |

From the results in Fig. 4, upon the solvent extraction of uranium, the extraction capability can be enhanced by increasing the mixing ratio of the tertiary amine, and it can be seen that uranium and thorium can be efficiently extracted from a sulfuric acid solution containing scandium and separated from scandium, for example, by setting the number of solvent extraction stages required to two or more stages in a case in which O/A = 1/1. Incidentally, it can be seen that it is preferable to set the number of extraction stages to two or more stages in a case in which O/A = 1/2.

In addition, from the results in Fig. 5, upon the solvent extraction of thorium, the extraction capability can be enhanced by decreasing the mixing ratio of the tertiary amine, and it can be seen that uranium and thorium can be efficiently extracted from a sulfuric acid solution containing scandium and separated from scandium by setting the number of solvent extraction stages required to three or more stages, for example, in a case in which O/A = 1. Incidentally, it can be seen that it is preferable to set the number of extraction stages to four or more stages in a case in which O/A = 1/2.

From the results above, it has been found that uranium and thorium can be simultaneously and efficiently extracted and effectively separated from scandium in an acidic solution of the target of treatment by performing solvent extraction using a mixed extractant in which a primary amine and a tertiary amine are contained in mixture.

In addition, it has been found that the capability to extract uranium and thorium can be enhanced by setting the mixing ratio of the tertiary amine to 20% by volume or more and less than 100% by volume and more preferably to 20 volume% or more and 40 volume% or less with respect to the primary amine particularly in a mixed extractant.

<Scrubbing step>

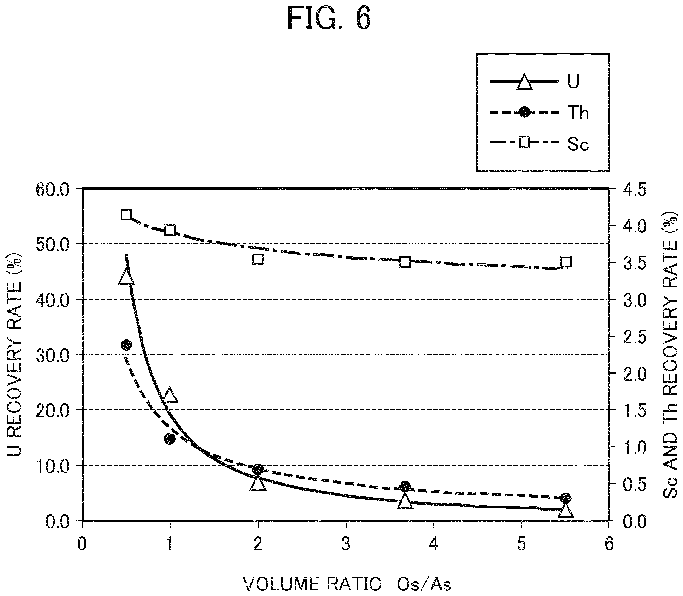

In the scrubbing step, the number of washing stages was set to three, a 1 mol/L sulfuric acid solution was used as a washing liquid, and the post-extraction extractant was subjected to washing. In addition, the volume ratio Os/As of the post-extraction extractant (Os) to the washing liquid (As) was changed in a range of from 0.5 to 5.5, and the influence of the volume ratio Os/As on the separation behavior of scandium, thorium, and uranium was examined. The results are shown in Fig. 6. Incidentally, the recovery rates were calculated from the amounts of elements in the post-washing liquid/the amounts of elements in the solution to be treated in the extraction step (S41).

From the results in Fig. 6, it can be seen that the recovery rates of scandium, thorium, and uranium in the post-washing liquid depend on the volume ratio Os/As in the scrubbing step. In other words, uranium and thorium are also recovered in the post-washing liquid in addition to scandium in a case in which the volume ratio Os/As is 0.5. In particular, the recovery rate of uranium is 40% or more. Moreover, the recovery rates of uranium and thorium decrease by increasing the volume ratio Os/As.

On the other hand, the recovery rate of uranium decreases to less than 10% and the recovery rate of thorium decreases to less than 1% when the volume ratio Os/As ratio is 2 or more. In addition, the recovery rate of scandium remains constant at around 3.5% when the volume ratio Os/As is 2 or more. From this fact, it can be seen that the volume ratio Os/As in the scrubbing step is preferably 2 or more.

<Acid washing step>

An acid washing step was performed in which the post-extraction extractant after being subjected to the scrubbing step was subjected to a backward extraction treatment and then the extractant (post-backward extraction extractant) recovered was subjected to acid washing (Example 5). The sulfuric acid solution (post-washing liquid) recovered in the scrubbing step was used as the acid washing liquid to be used in the acid washing treatment, and the recovery rate of scandium when the extractant washed was repeatedly used in the extraction step was examined.

Specifically, a treatment was performed in which a post-washing liquid was used as an acid washing liquid in the acid washing step, and then an extraction step was performed using the extractant subjected to acid washing as an extractant (mixed extractant) in the extraction step. Thereafter, treatments in the scrubbing step and the backward extraction step were also performed. Moreover, the recovery rate of scandium was examined from the amount of scandium discharged from each step.

Incidentally, an example (Reference Example 1) in which the same operation was performed using a new sulfuric acid solution as a washing liquid in the acid washing step was also carried out for comparison, and the presence or absence of the difference in the recovery rate of scandium was confirmed.

The measurement results on the recovery rate of scandium discharged in each step are presented in the following Table 10. Incidentally, the recovery rate of scandium was calculated by the following equation.

```
Recovery rate of scandium (%) = (amount of scandium discharged
in solution in each step - input)/input of scandium to
extraction step × 100
```

[Table 10]

| | Recovery rate of scandium [%] | | | |
|---|---|---|---|---|
| | Extraction step | Scrubbing Step | Backward extraction step | Acid washing step |
| Example 5 | 96 | 3 | 4 | -3 |
| Reference Example 1 | 93 | 3 | 4 | 0 |

As presented in Table 10, it has been found that scandium is extracted into the extractant by 3% (recovery rate of scandium = -3%) since the post-washing liquid recovered in the scrubbing step was used as the acid washing liquid in the acid washing step in Example 5. Moreover, the extractant recovered through the treatment in such an acid washing step was repeatedly reused as a mixed extractant in the extraction step, and as a result, the recovery rate of scandium in the extraction step increased by about 3% as compared with that in Reference Example 1 in which a new sulfuric acid solution was used.

It has been found that the recovery rate of scandium can be effectively increased by using the post-washing liquid recovered in the scrubbing step as the acid washing liquid in the acid washing step. In addition, it has been found that scandium can be more economically recovered without taking time and effort by using the post-washing liquid discharged from the scrubbing step as the washing liquid in the treatment in the acid washing step, for example, as compared with the case of sending the post-washing liquid to the scandium recovery step.

**Claims**

1. A scandium purification method, comprising subjecting a scandium-containing acidic solution to solvent extraction using a mixed extractant containing a primary amine and a tertiary amine to separate the scandium-containing acidic solution into a scandium-containing liquid extraction residue and a post-extraction extractant.

2. The scandium purification method according to claim 1, wherein the mixed extractant contains the tertiary amine at a proportion of 20% by volume or more and less than 100% by volume with respect to the primary amine.

3. The scandium purification method according to claim 1 or 2, wherein the primary amine is represented by a general formula $NH_2R$, where R denotes a branched alkyl group having from 16 to 22 carbon atoms.

4. The scandium purification method according to any one of claims 1 to 3, wherein the tertiary amine is tri-normal-octylamine.

5. The scandium purification method according to any one of claims 1 to 4, comprising a scrubbing step of washing the post-extraction extractant, wherein
   a volume ratio (Os/As) of the post-extraction extractant (Os) to a washing liquid (As) is set to 2 or more and 10 or less in the scrubbing step.

6. The scandium purification method according to claim 5, comprising a washing step of washing an extractant obtained after a backward extraction treatment of the post-extraction extractant, wherein
   a washing treatment is performed using a post-washing liquid discharged in the scrubbing step as a washing liquid in the washing step, and
   an extractant obtained after a washing treatment in the washing step is reused as the mixed extractant to be used in the solvent extraction.

7. The scandium purification method according to any one of claims 1 to 6, wherein the acidic solution is an eluate obtained by allowing a scandium-containing solution to pass through an ion exchange resin and then eluting scandium from the ion exchange resin.

8. The scandium purification method according to any one of claims 1 to 7, further comprising a step of adding oxalic acid to the liquid extraction residue to generate a precipitate containing scandium oxalate and then roasting the precipitate to obtain scandium oxide.

# FIG. 1

NICKEL OXIDE ORE

```
┌─────────────────────────────────────────┐
│                                          │
│   ┌──────────────────────┐  ~S11    ~S1  │
│   │    LEACHING STEP     │              │
│   └──────────────────────┘              │
│            LEACHATE        ~S12          │
│   ┌──────────────────────┐              │
│   │  NEUTRALIZATION STEP │              │
│   └──────────────────────┘              │
│      POST-NEUTRALIZATION LIQUID          │
│                            ~S13          │
│   ┌──────────────────────┐              │
│   │  SULFURIZATION STEP  │              │
│   └──────────────────────┘              │
└─────────────────────────────────────────┘
```

POST-SULFURIZATION LIQUID

┌────────────────────────────────────────┐
│     SCANDIUM (Sc) ELUTION STEP          │ ~S2
└────────────────────────────────────────┘

Sc ELUATE

┌────────────────────────────────────────┐
│          NEUTRALIZATION STEP            │ ~S3
└────────────────────────────────────────┘

```
                                                    LIQUID
                                  ~S4               EXTRACTION
┌─────────────────────────────────────┐             RESIDUE
│  REUSE        ~S41                   │
│      ┌──────────────────────┐        │──────────────────►
│      │   EXTRACTION STEP    │        │
│      └──────────────────────┘        │
│                                      │         POST-
│      POST-EXTRACTION EXTRACTANT      │         WASHING
│                          ~S42        │         LIQUID
│          ┌──────────────────────┐    │
│          │   SCRUBBING STEP     │────│────►
│          └──────────────────────┘    │
│                          ~S43        │
│      ┌──────────────────────┐        │
│      │ BACKWARD EXTRACTION STEP │    │
│      └──────────────────────┘        │
└─────────────────────────────────────┘
```

POST-BACKWARD
EXTRACTANT  EXTRACTION LIQUID

┌────────────────────────────────────────┐
│        SCANDIUM RECOVERY STEP           │ ~S5
└────────────────────────────────────────┘

(AFTER ACID
WASHING)
EXTRACTANT ◄─── ┌──────────────────────┐ ~S6
                │   ACID WASHING STEP   │◄───
                └──────────────────────┘

FIG. 2

EP 3 546 604 A1

# FIG. 3

## FIG. 4

EP 3 546 604 A1

## FIG. 5

# FIG. 6

## INTERNATIONAL SEARCH REPORT

| | International application No. |
|---|---|
| | PCT/JP2017/041068 |

**A. CLASSIFICATION OF SUBJECT MATTER**
Int.Cl. C22B59/00(2006.01)i, C22B3/26(2006.01)i

According to International Patent Classification (IPC) or to both national classification and IPC

**B. FIELDS SEARCHED**

Minimum documentation searched (classification system followed by classification symbols)
Int.Cl. C22B59/00, C22B3/26

Documentation searched other than minimum documentation to the extent that such documents are included in the fields searched

| | |
|---|---|
| Published examined utility model applications of Japan | 1922-1996 |
| Published unexamined utility model applications of Japan | 1971-2017 |
| Registered utility model specifications of Japan | 1996-2017 |
| Published registered utility model applications of Japan | 1994-2017 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2016-108664 A (SUMITOMO METAL MINING CO., LTD.) 20 | 1-5, 7-8 |
| A | June 2016, claims 1-2, paragraphs [0010], [0012], | 6 |
| | [0034], [0079], [0080], [0082]-[0085], example 1 | |
| | & US 2017/0321301 A1, claims 1-2, paragraphs [0010], | |
| | [0042], [0086], [0087], [0090]-[0093], example 1 & WO | |
| | 2016/084830 A1 & EP 3208352 A1 & CA 2968341 A & AU | |
| | 2015351446 A & CN 107002176 A | |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 December 2017 | 16 January 2018 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| International application No. |
|---|
| PCT/JP2017/041068 |

C (Continuation).　DOCUMENTS CONSIDERED TO BE RELEVANT

| Category* | Citation of document, with indication, where appropriate, of the relevant passages | Relevant to claim No. |
|---|---|---|
| Y<br>A | JP 2000-507308 A (CABOT CORPORATION) 13 June 2000, page 14, lines 12-21, fig. 1, 2, examples, page 28, tables & US 7282187 B1, page 7, left column, line 63 to right column, line 4, fig. 1, 2, examples, page 11, tables & WO 97/036011 A1 & DE 19781673 T & AU 2581897 A & RU 2203335 C & CN 1219978 A | 1-5, 7-8<br>6 |
| A | JP 2016-065273 A (SUMITOMO METAL MINING CO., LTD.) 28 April 2016, claims 1-6, paragraph [0050], examples (Family: none) | 1-8 |
| A | JP 10-212532 A (FANSTEEL INC.) 11 August 1998, claim 4, paragraph [0039]<br>& US 5787332 A, claim 4, page 17, left column, lines 52-67 & EP 834584 A1 & CA 2212714 A1 | 1-8 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H03173725 B
- JP H09291320 B
- WO 2014110216 A
- JP 2016108664 A